Europäisches Patentamt

European Patent Office

Office européen des brevets

(11) Numéro de publication : **0 412 903 B1**

(12) **FASCICULE DE BREVET EUROPEEN**

(45) Date de publication du fascicule du brevet :
**05.01.94 Bulletin 94/01**

(21) Numéro de dépôt : **90402259.7**

(22) Date de dépôt : **07.08.90**

(51) Int. Cl.⁵ : **B29C 67/20,** B29C 67/18,
E06B 5/16, // B29K61:04,
B29K105:06

(54) **Panneau en matériau composite résistant au feu et aux impacts, étanche et acoustiquement absorbant, et son procédé de fabrication.**

(30) Priorité : **07.08.89 FR 8910612**
**03.11.89 FR 8914403**

(43) Date de publication de la demande :
**13.02.91 Bulletin 91/07**

(45) Mention de la délivrance du brevet :
**05.01.94 Bulletin 94/01**

(84) Etats contractants désignés :
**AT BE CH DE DK ES FR GB GR IT LI LU NL SE**

(56) Documents cités :
**EP-A- 0 278 622
WO-A-85/04131
DE-A- 2 705 725
DE-A- 2 936 485
FR-A- 2 376 177
COMPOSITES, vol. 25, no. 2, mars/avril 1985, pages 78-85, Paris, FR; DOCUMENTGLAVER-BEL: "Microsphères creuses de verre, leurs caractéristiques, leursusages"**

(73) Titulaire : **ELECTRICITE DE FRANCE Service National
2, rue Louis Murat
F-75008 Paris (FR)**
Titulaire : **SOCIETE HAMON
7 Rue de la Tour des Dames
F-75009 Paris (FR)**

(72) Inventeur : **Truchet,Jean Marc
"Les Lavandes" 5 rue de la Saint-Vincent
F-01500 Ambérieu-en-Bugey (FR)**
Inventeur : **Bonada,Henri
31 rue des Charpennes
F-69680 Chassieu (FR)**
Inventeur : **Mocholi,Dominique
100C rue Coste
f-69300 Caluire Et Cuire (FR)**
Inventeur : **Tranchan,Philippe
Route de la Gare
F-72570 Montmirail (FR)**
Inventeur : **Gibault,Jacques
121 rue de Sèze
F-69006 Lyon (FR)**
Inventeur : **Bezault,Yves
24 rue Saint Valérien
F-28200 Chateaudun (FR)**

(74) Mandataire : **Martin, Jean-Paul et al
c/o CABINET LAVOIX 2, Place d'Estienne d'Orves
F-75441 Paris Cedex 09 (FR)**

EP 0 412 903 B1

## Description

La présente invention a pour objet un procédé de fabrication d'un élément coupe-feu tel qu'un panneau en matériau composite, formé d'une résine chargée de microsphères et de fibres coupées pour constituer ainsi une mousse syntactique ou un béton de résine, complété sur ses deux faces de parements armés de tissus et/ou de mats de fibres, selon un état de la technique connu des demandeurs.

Un tel élément coupe-feu tel que panneau est destiné à être utilisé par exemple comme :
- mur, cloison et porte coupe-feu dans les bâtiments et dans les véhicules,
- paroi et porte de fours,
- comptoir anti-feu dans les banques et les aéroports,
- gaines de ventilation anti-feu et leurs clapets, tuyauteries, etc.

La présente invention concerne également la réalisation, par le procédé précité, de panneaux en matériau composite possédant des propriétés de résistance au feu, de résistance aux impacts, d'étanchéité aux fluides et d'amortissement acoustique.

Dans le cadre de l'invention, on entend par panneau tout objet de forme plane (plaque) ou non, qui, d'une façon générale, présente une épaisseur (constante ou variable) sensiblement plus réduite que ses autres dimensions.

D'une façon privilégiée, mais non exclusive, l'invention vise la réalisation de portes ou panneaux de porte, de clapets de gaines de ventilation, des gaines elles-mêmes et, d'une façon générale, de tous organes d'isolement ou de canalisation soumis à un environnement gazeux en ou hors pression et devant rester étanche et résister mécaniquement sous l'action du feu ou d'impacts.

Les matériels traditionnellement utilisés pour la protection contre l'incendie et/ou en balistique sont généralement constitués d'une association judicieuse d'éléments divers juxtaposés, tels que l'acier, la laine de verre en tant qu'isolant thermique, les panneaux de particules minérales, organiques ou végétales (plâtre, bois, silicates divers, etc.) (voir par exemple FR-A-2 567 189).

L'invention a pour but de proposer des panneaux perfectionnés du genre considéré qui répondent mieux que par le passé aux diverses exigences de la pratique, et qui notamment soient résistants au feu et aux impacts, étanches aux fluides (gaz ou liquides), acoustiquement amortissants, qui conservent leurs caractéristiques dans le temps, et qui soient d'un poids et d'un coût mieux appropriés aux exigences des utilisateurs.

Les dénominations utilisées dans ce qui suit pour désigner les composants (produits utilisés et parties structurelles) sont celles mentionnées dans les normes en vigueur telles que NF T 50-100 relatives aux matériaux composites, auxquelles on se réfèrera.

A ces fins, un panneau du genre précité agencé conformément à l'invention se caractérise
en ce que le matériau composite est constitué par une matrice de type phénoplaste qui est, dans sa partie centrale (âme), renforcée de particules à base minérale et renforcée par des fibres et qui est, superficiellement sur ses deux faces principales (semelles), chargée de nappes de renforts minéraux, tissés ou non tissés, ces particules, fibres et nappes étant compatibles vis-à-vis de la matrice,
et en ce qu'au moins un insert de renfort est noyé au moins partiellement dans le matériau composite.

De ce fait, un panneau conforme à l'invention satisfait aux diverses exigences mentionnées plus haut du fait que l'ensemble du panneau n'est plus composite dans le sens d'une juxtaposition d'éléments hétérogènes, mais que c'est le matériau composite constituant le panneau qui répond intrinsèquement par sa nature aux exigences recherchées. La structure géométriquement symétrique du panneau (âme et semelles) par rapport à un plan médian diminue la génération d'efforts internes dissymétriques et accroît la qualité de la résistance mécanique et le comportement homogène au feu. Cette formulation du matériau composite ne nuit pas à son homogénéité et les risques de délamination, notamment entre l'âme et les semelles, peuvent être évités par un choix approprié des produits phénoplastes mis en jeu (qui peuvent être identiques dans les deux zones - âme et semelles-) et par un choix également approprié des nappes utilisées qui peuvent procurer un ancrage dans la partie du matériau correspondant à l'âme.

L'insert de renfort peut être métallique, notamment en acier inoxydable, et de préférence il est alors constitué sous forme sensiblement plane (bande, plaque, ...) notamment par un treillage et/ou un grillage et/ou une tôle perforée, de manière que le matériau phénoplaste puisse conserver une relative homogénéité même au niveau des inserts et que soient évités des clivages ou amorces de clivage qui amoindrissent considérablement la résistance du panneau. Mais il est également possible de mettre en oeuvre des inserts de renfort constitués en matériau composite du même type phénoplaste que la susdite matrice et incorporant des tissus de verre stratifiés à haute teneur pondérale, de manière à constituer des profilés de grandes caractéristiques mécaniques dans les directions appropriées.

D'une façon préférentielle, les inserts sont disposés sensiblement dans le plan médian du panneau, toujours dans le souci d'assurer une symétrie par rapport au plan médian dans le but précisé précédemment.

EP 0 412 903 B1

Le panneau peut être équipé d'au moins un organe rapporté (accessoire et/ou élément de support) qui est solidarisé au susdit insert ; il peut notamment s'agir de tiges de support dépassant la surface du panneau et destinées à recevoir un accessoire tel qu'une poignée de manoeuvre. Lorsqu'il s'agit d'un panneau mobile en rotation, tel qu'une porte, un panneau de porte ou analogue, qui est équipé de gonds de charnières, ces gonds sont solidarisés (notamment soudés) à des plaques métalliques respectives insérées dans le matériau composite dans le plan médian du panneau, à proximité d'un chant de celui-ci.

De préférence, l'organe rapporté est solidarisé à l'insert avant constitution (notamment avant formage ou moulage et réticulation) de la matrice.

Par ailleurs, pour ce qui concerne plus particulièrement la formulation du matériau composite, on peut avantageusement avoir recours à l'une ou à l'autre ou à toute combinaison des dispositions qui suivent :

- le produit composite, dans la zone de l'âme, possède la formulation pondérale qui suit:

| | |
|---|---|
| résine phénolique catalysée : | de 70 à 80 % |
| particules à base minérale : | de 8 à 12 % |
| fibres : | de 3 à 6 % |

- les particules à base minérale sont des microsphères creuses à base de silice ;
- les fibres ont une longueur comprise entre 10 mm et 18 mm ;
- le produit composite, dans la zone des semelles, possède la formulation qui suit :

résine phénolique catalysée : de 35 à 50 % en poids

et au moins une nappe de tissu bouclé ayant une masse surfacique d'environ 500 g/m$^2$, les boucles étant noyées dans la zone de l'âme ;

- le matériau composite possède en outre une nappe superficielle en tissu léger ;
- dans un exemple typique, le matériau composite possède la formulation qui suit :

dans la zone d'âme

| | |
|---|---|
| résine phénolique catalysée: | 76,3 % en poids |
| microsphères à base de silice : | 10,25 % en poids |
| fibres de verre de 13 mm : | 4,3 % en poids |

dans les zones de semelle :

| | |
|---|---|
| résine phénolique catalysée : | 50 % en poids |
| renforts tissés de verre : | 50 % en poids |

trois nappes de tissu bouclé ayant une masse surfacique de 500 g/m$^2$,

une nappe intérieure de tissu bouclé ayant une masse surfacique de 400 g/m$^2$, les boucles étant noyées dans l'âme (interfaces semelles/âme),

et une nappe de surface d'un tissu léger ayant une masse surfacique de 30 g/m$^2$.

- le tissu est un taffetas.

L'invention propose également un panneau en matériau composite possédant des propriétés de résistance au feu, de résistance aux impacts, d'étanchéité aux fluides et d'amortissement acoustique,

caractérisé en ce que le matériau composite est constitué par une matrice de type phénoplaste qui est, dans sa partie centrale (âme), chargée de particules à base minérale et renforcée par des fibres et qui est, superficiellement sur ses deux faces principales (semelles) renforcée de nappes de renforts minéraux, tissés ou non tissés, ces particules, fibres et nappes étant compatibles vis-à-vis de la matrice ;

en ce qu'au moins un insert de renfort (3) est noyé au moins partiellement dans le matériau composite ;

en ce que le matériau composite, dans la zone de l'âme, possède la formulation pondérale qui suit :

| | |
|---|---|
| résine phénolique catalysée : | de 70 à 80 % |
| particules à base minérale : | de 8 à 12 % |
| fibres (longueur entre 10 et 18 mm): | de 3 à 6 % |

et en ce que le matériau composite, dans la zone des semelles, possède la formulation qui suit :

résine phénolique catalysée : de 35 à 50 % en poids

et au moins une nappe de tissu bouclé ayant une masse surfacique d'environ 500 g/m$^2$, les boucles étant noyées dans la zone de l'âme.

Conformément au procédé selon l'invention, la fabrication de cet élément coupe-feu s'effectue de la manière suivante :

a) au moins un insert de renfort étant noyé au moins partiellement dans le matériau composite,

b) on réalise chaque parement par dépôt, sur deux panneaux constituant deux grandes faces d'un moule, de mats et/ou de tissus qui sont imprégnés de résine puis d'une couche terminale de tissu bouclé, dont on relève les boucles,

c) on ferme le moule en disposant sur un fond en vis-à-vis en position verticale les deux panneaux revêtus intérieurement de leurs parements et en obturant les extrémités du moule ainsi réalisé, tout en laissant ouverte sa face supérieure,

3

d) on dépose le moule sur une table vibrante, et on y coule un mélange préalablement préparé sous agitation continuelle et convenablement dosé, par passes successives jusqu'à remplissage du moule,

e) on procède à un étuvage du mélange coulé dans le moule pendant une durée et à une température appropriées, et on démoule l'élément coupe-feu obtenu.

Suivant une caractéristique de l'invention, la préparation du mélange, avant coulée dans le moule, s'effectue dans l'ordre suivant :

a) 100% de la quantité totale de résine nécessaire et 50% environ de la quantité totale nécessaire de microsphères,

b) 50% environ de la quantité totale nécessaire d'un catalyseur et 30% environ de la quantité totale nécessaire de microsphères,

c) 50% environ de la quantité totale nécessaire de catalyseur et 20% environ de la quantité totale nécessaire de microsphères,

ces pourcentages pouvant varier approximativement de ± 10%.

Suivant d'autres particularités de l'invention :

- on incorpore progressivement au mélange des fibres coupées tout en assurant un brassage lent du mélange.
- avant préparation du mélange, on étuve les microsphères pour abaisser leur degré d'humidité, on stocke la résine et le catalyseur à température ambiante, et on nettoie des inserts et pièces de renforcement destinés à être introduits et fixés dans l'élément coupe-feu par des perçages prévus dans le moule.

L'invention sera mieux comprise à la lecture de la description détaillée qui suit de certains modes de réalisation donnés uniquement à titre illustratif. Dans cette description, on se réfère aux dessins annexés sur lesquels :

- la figure 1 est une vue de face d'un panneau mobile en rotation agencé conformément à l'invention,
- les figures 2 et 3 sont des vues respectivement en bout et de dessous du panneau de la fig. 1,
- les figures 4A et 4B sont des vues respectivement du verso et du recto d'un exemple concret de panneau de porte coupe feu agencé selon l'invention, ces vues étant faites matériau superficiel enlevé de manière à voir les inserts,
- la figure 5 est une vue de face d'un exemple concret de volet de désenfumage agencé selon l'invention ; et
- la figure 6 est une vue de dessous, en coupe selon la ligne VI-VI, du volet de la fig. 5.

La figure 7 est une vue en coupe schématique d'un élément coupe-feu dont le procédé de fabrication fait l'objet de l'invention.

La figure 8 est une vue en coupe suivant 8/8 de la Fig. 9 d'un moule pouvant être utilisé dans le cadre du procédé de fabrication de l'élément coupe-feu de la Fig. 7.

La figure 9 est une vue en perspective schématique du moule de la Fig. 8.

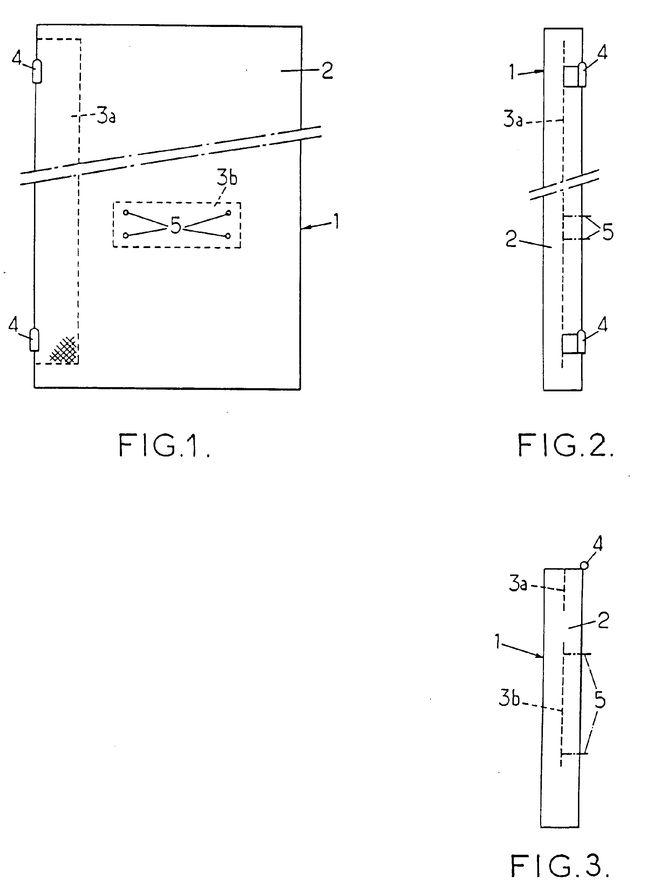

Sur les figures 1 à 3, le panneau 1 (qui tel que représenté est un panneau mobile en rotation comme une porte, un panneau de porte ou analogue) est constitué dans son ensemble 2 en un matériau composite formé par une matrice du type phénoplaste qui est, dans sa partie centrale (âme), chargée de particules à base minérale et renforcée par des fibres et qui est, superficiellement sur ses deux faces principales (semelles), renforcée de nappes de renforts minéraux, tissés ou non tissés, ces particules, fibres et nappes étant compatibles vis-à-vis de la matrice phénoplaste ; un ou plusieurs inserts de renfort sont noyés au moins partiellement dans le matériau composite, dans des conditions qui seront précisées plus loin;

Dans la partie centrale ou âme, la matrice de type phénoplaste est constituée d'une résine phénolique (par exemple celle commercialisée sous la référence N 1203 par la société Charbonnages de France RT) à laquelle est adjointe un catalyseur (par exemple celui commercialisé sous la référence C 1650 par la Société CDF) dans des conditions et proportions prescrites par le fabricant. La part pondérale de la résine catalysée dans le matériau composite est comprise entre 70 et 80 %.

L'adjonction de microsphères creuses en un matériau inerte vis-à-vis de la matrice phénoplaste, par exemple à base de silice, permet l'allègement de la structure. Ces microsphères (par exemple référence 3 M B 23/500 de la Société OMYA) sont présentes dans une proportion pondérale comprise entre 8 et 12 %.

Enfin, la présence d'un matériau fibreux à fibres relativement courtes (par exemple fibres de verre coupées d'une longueur comprise entre 10 et 18 mm) assure la cohésion du matériau ; la proportion pondérale de ces fibres est comprise entre 3 et 6 %.

Pour protéger le matériau sus-indiqué contre les agressions extérieures (protection mécanique contre les chocs et protection thermique -écran ablatif-), et éventuellement pour améliorer la finition et la présentation du panneau, les deux faces principales du panneau sont stratifiées (formation de semelles respectives).

Chaque semelle est, elle aussi, constituée en une résine phénolique catalysée (identique ou non à celle utilisée pour constituer l'âme précédente) dans une proportion pondérale d'environ 35 à 50 %, qui est renforcée

4

par une ou plusieurs nappes, tissées ou non tissées, d'un renfort minéral chimiquement et mécaniquement compatible avec la matrice.

Bien que tous les types de tissés puissent convenir, on retiendra en particulier les taffetas, plus intéressants en raison de leur faible coût, disposés en plusieurs nappes (de deux à quatre de préférence) et utilisés seuls ou liés entre eux par des matériaux non-tissés (mat, etc...). D'une façon tout-à-fait avantageuse, on pourra utiliser, au moins pour certaines nappes, du taffetas bouclé ; en particulier pour la nappe intérieure de la semelle (c'est-à-dire celle directement en contact avec l'âme), les boucles du taffetas de cette nappe sont noyées dans le matériau constitutif de l'âme, de manière que soit réalisé un ancrage particulièrement efficace. De préférence, on utilisera des taffetas ayant une masse surfacique de l'ordre de 500 g/m².

On pourra en outre améliorer l'aspect du panneau en constituant la surface extérieure avec une nappe en un taffetas plus fin et plus léger, par exemple de 30 g/m².

Dans un exemple typique, on a réalisé le matériau composite suivant qui a donné les résultats les plus intéressants de tenue au feu :

dans la zone d'âme :

```
régime phénolique catalysée
(N 1203 et C 1650) :              76,3 % en poids
microsphères à base de silice
(3 M B 23/500) :                 10,25 % en poids
fibres de verre de 13 mm :        4,3 % en poids
```

dans les zones de semelle :

```
résine phénolique catalysée
(N 1203 et C 1650)               50 % en poids
renforts tissés de verre         50 % en poids
```

trois nappes de tissus à 500 g/m² (tissu Roving standard 500 T de la Société CHOMARAT),

une nappe de tissu à 400 g/m² (par exemple tissu Roviboucle DF 18 de la Société CHOMARAT) consti- la couche intérieure dont les boucles sont noyées dans le matériau de l'âme,

et une nappe de surface en un taffetas fin et léger à 30 g/m².

Le matériau composite qui vient d'être décrit est pourvu d'inserts de renfort 3 qui peuvent être métalliques, notamment en acier inoxydable, et qui se présentent avantageusement sous forme sensiblement plane (telle que bande, plaque, etc.) ; ces inserts peuvent être constitués de toute façon appropriée de manière à être parfaitement ancrés dans le matériau composite : il est préférable qu'il s'agisse de structures aérées, telles que treillis, grillages ou tôles perforées, de manière à favoriser leur accrochage mécanique au sein du phénoplaste et à accroître les caractéristiques mécaniques du panneau.

Dans l'exemple représenté schématiquement aux figures 1 à 3, l'un des inserts métallique 3a s'étend le long d'un chant du panneau (mais il peut aussi s'agir d'inserts indépendants) et des gonds de charnière 4 lui sont fixés par soudure. Un autre insert métallique 3b est disposé en position approximativement centrale et des tiges de support 5 (notamment des tiges filetées) lui sont fixées par soudure ; ces tiges dépassent de l'une des surfaces principales du panneau (voir fig. 2 et 3) et sont aptes à recevoir un accessoire de la porte tel que poignée, serrure, etc...

Bien entendu, les organes rapportés (accessoires ou éléments de support) peuvent être solidarisés aux inserts par tous moyens appropriés (vissage, rivetage, boulonnage, sertissage, ...) autres que la soudure.

De plus, il est souhaitable que les organes rapportés soient solidarisés aux inserts de renfort avant constitution du matériau composite, c'est-à-dire avant formage ou moulage et réticulation de la matrice.

Il est également possible de mettre en oeuvre des inserts non métalliques, constitués eux aussi en un matériau composite obtenu à partir de la même famille de résine que celle utilisée pour le panneau et de tissus de verre stratifiés à haute teneur pondérale de manière à constituer des profilés de grandes caractéristiques mécaniques dans les directions appropriées. Il est ainsi possible de constituer des inserts plans à hautes caractéristiques mécaniques utilisables en lieu et place d'au moins certains des inserts métalliques précités (en particulier là où une soudure n'est pas nécessaire) et aussi pour former des inserts de renfort de structure sous forme de profilés transversaux, diagonaux, longitudinaux, etc..., ayant toute section appropriée (en H, en U, en L, ...).

Dans tous les cas, quelle que soit la forme de l'insert, celui-ci est disposé avantageusement dans le plan médian ou à cheval symétriquement sur le plan médian du panneau, de manière à conserver la symétrie générale de structure du panneau par rapport à ce plan médian, symétrie qui, comme déjà indiqué plus haut, diminue les efforts internes dissymétriques et accroît la résistance mécanique et la tenue au feu du panneau.

Il est en outre possible de prévoir des renforts de chants, notamment en matériau composite, destinés à couvrir et à protéger les chants du panneau et à assurer l'étanchéité notamment entre deux panneaux battants d'une porte à double battant. Ce renfort de chant est constitué sous forme d'un profilé ayant une section transversale globalement en T, l'aile du T étant noyée dans le matériau composite du panneau, dans le plan médian de celui-ci et la branche transversale du T recouvrant le chant et étant conformée pour procurer l'étanchéité recherchée.

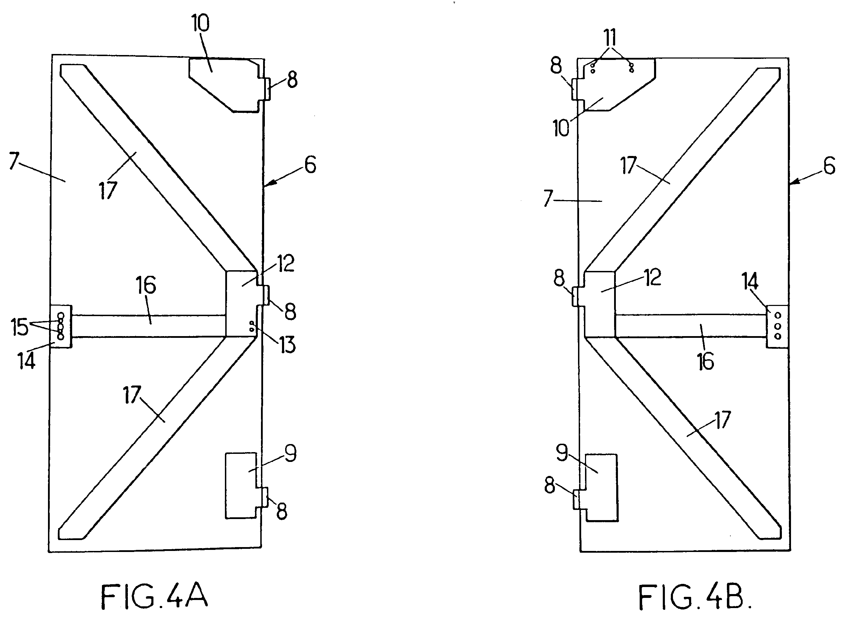

En se référant maintenant aux figures 4A et 4B, il y est représenté un exemple concret de réalisation d'un panneau pivotant de porte coupe-feu agencé conformément à l'invention (le dormant de la porte n'étant pas montré). Sur ces deux figures, la matière située entre le plan médian et l'observateur est supposée enlevée de manière à rendre apparents les inserts mis en place.

Conformément aux dispositions de l'invention, le panneau pivotant ou ouvrant de porte, désigné dans son ensemble par la référence 6, est muni d'inserts métalliques en forme de plaques noyées dans le plan médian du volume parallélépipédique de matériau composite 7.

On notera que la fig. 4A montre le verso (côté intérieur au local) du panneau de porte tandis que la fig. 4B montre le recto (côté extérieur au local) du même panneau.

Le long de son bord de pivotement, le panneau est muni d'inserts métalliques en forme de plaque avec paumelle saillante (par exemple paumelles CLE de 180 mm sur butées à billes du type à souder). Les paumelles 8 (ici au nombre de trois) peuvent être rapportées par soudures sur des plaques métalliques agencées de façon spécifique en fonction de leur emplacement le long du panneau. La plaque inférieure 9 est simple ; la plaque supérieure 10 est munie, sur sa face recto (fig. 4B), de tiges filetées 11 saillantes destinées à recevoir un organe de fermeture de porte du type à vérin - non représenté - (par exemple le modèle DORMA TS 83 GR N° 4, à huile ininflammable) ; enfin la plaque intermédiaire 12 est munie, sur sa face verso (fig. 4A), de tiges filetées 13 saillantes destinées à recevoir un des appuis de fixation de la barre d'actionnement anti-panique -non montrée- (par exemple du type JPM "push bar 90") destinée à l'actionnement d'une serrure à un point. Sur l'autre bord du panneau et en regard de la plaque 12 est disposée une plaque 14 munie de tiges filetées 15 saillant du côté verso pour la fixation de l'autre extrémité de la susdite barre d'actionnement antipanique et de la serrure associée.

Enfin, sont prévus des renforts de rigidification constitués par des profilés en H en matériau composite, les ailes du H étant parallèles aux faces principales du panneau : l'un 16 sensiblement horizontal s'étend entre les deux plaques 12 et 14, et les deux autres 17, diagonaux, s'étendent entre les deux coins antérieurs, respectivement supérieur et inférieur, du panneau et la plaque 12.

Un panneau de porte ainsi agencé, et dont la formulation du matériau composite était celle indiquée dans l'exemple typique mentionné plus haut, a été monté sur un dormant métallique constitué par assemblage par soudure de profilés en L et en U, formant un cadre à quatre côtés dont trois (deux latéraux et un supérieur) munis d'une feuillure ; l'étanchéité à froid était assurée par un joint HELIOS CLA/L de 12 mm placé en fond de feuillure et l'étanchéité à chaud était assurée par un joint intumescent INTUMEX de 20 mm x 3 mm, placé sur le dormant face aux chants du panneau.

Une porte de ce type a été soumise à des essais de tenue sous une température d'environ 1000°C et une pression d'environ 15 Pa. Pour le panneau exposé coté recto, l'étanchéité aux gaz chauds et inflammables et l'isolation thermique ont été conservées pendant environ 1 h 30 mn ; pour le panneau exposé côté verso, cette étanchéité et cette isolation ont été conservées pendant environ 2 h. Dans les deux cas, la résistance mécanique de la porte était toujours conservée au bout de 2 h. d'essai. Finalement, ce panneau de porte a pu être homologué pare-flammes et coupe-feu pour une durée de 1 h lorsqu'exposé côté recto, pour une durée de 1 h 30 lorsqu'exposé côté verso et pour une durée de 1 h avec la double exposition recto et verso.

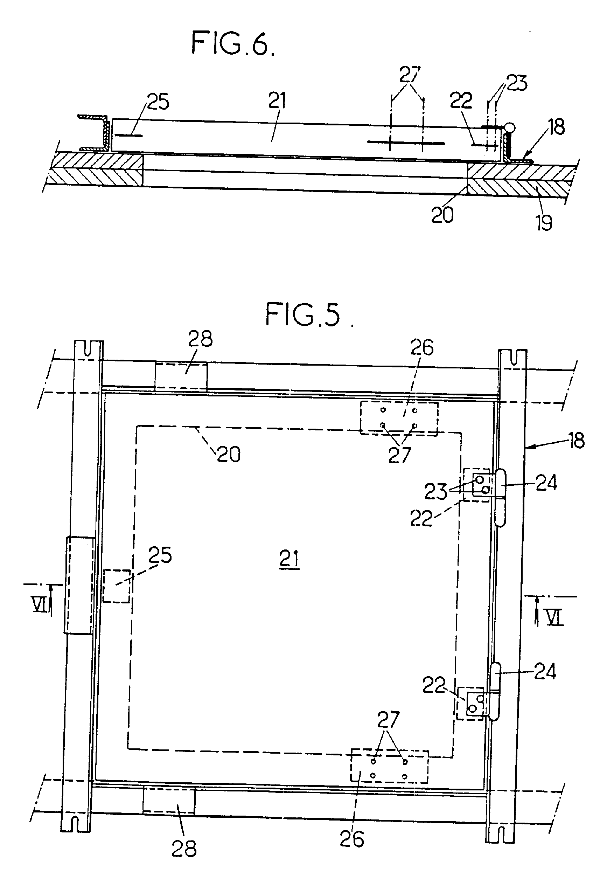

Enfin, en se référant maintenant aux figures 5 et 6, il y est représenté un exemple concret de réalisation d'un volet de désenfumage agencé conformément à l'invention.

Un cadre dormant 18, constitué par un assemblage (soudure) de quatre cornières métalliques, est fixé sur un conduit 19, autour d'une ouverture 20 pratiquée dans la paroi de celui-ci (par exemple constitué en PROMABEST Y). Le long de son bord de pivotement, le panneau mobile ou ouvrant 21 est muni de deux inserts 22 en forme de plaque (acier inoxydable de 2 mm d'épaisseur) et équipés de tiges filetées 23, saillant ves la face extérieure, pour la fixation de paumelles 24 (par exemple paumelles à clé à lames CLEMENSON). Sensiblement au milieu de son bord opposé, le panneau est muni d'un insert 25 (acier inoxydable de 2 mm d'épaisseur) équipé de tiges filetées, saillant vers la face extérieure, pour la fixation d'un verrou -non représenté- par exemple verrou électromagnétique SOUCHIER PAGES. Enfin, le long des bords supérieur et inférieur du panneau et à proximité du bord de pivotement, sont disposés respectivement deux inserts 26 (acier inoxydable de 2 mm d'épaisseur) munis de tiges filetées 27, saillant vers la face extérieure, pour la fixation de cornières destinées à supporter deux organes de fermeture automatique du type vérin -non représenté- (vérin à azote SOUCHIER PAGES). Sur les cornières transversales supérieure et inférieure sont fixées des cornières respectives 28 de support de la partie fixe des vérins.

Le volet qui vient d'être décrit se monte sur le conduit de désenfumage 19 en ceinturant celui-ci à l'aide de tiges filetées (non montrées) permettant de plaquer le volet sur une face du conduit munie d'une ouverture appropriée. Ce type de montage permet la mise en place des volets après l'installation des gaines, à un endroit qui tient compte du matériel voisin et du débattement angulaire du volet.

Pour assurer l'étanchéité du montage, les cornières du cadre 18 sont fixées sur la paroi de la gaine avec interposition d'un joint dual en solicone "60 shore". Dans la zone de recouvrement du volet et de la paroi de la gaine entourant l'ouverture, on interpose un joint en mousse minérale B 10 ou bien un double joint constitué d'un joint interne céramique MECATISS et d'un joint externe à lèvres HELIOS CLA/L de 14 mm.

Le volet est normalement fermé en cas d'incendie. Il s'ouvre :
- par action sur un bouton poussoir qui déverrouille le verrou,
- par action d'un fusible intégré dans le verrou.

Des vérins amortissent l'ouverture du volet et assistent la fermeture. Les autres volets installés sur le même conduit restent fermés et protègent les locaux traversés par ce conduit.

Un volet de désenfumage ainsi agencé, et dont la formulation du matériau composite était celle indiquée dans l'exemple typique précité, a été soumis à des essais de résistance au feu, sous une température croissant jusqu'à environ 1050°C pendant une durée d'environ 2 h 30 mn. A la fin de l'essai, la résistance mécanique du volet était conservée et les verrous et vérins étaient en bon état de fonctionnement, le volet s'ouvrant très facilement ; l'étanchéité aux gaz chauds et inflammables était conservée ; pour ce qui était de l'isolation thermique, l'élévation de température sur la face non exposée du volet était de l'ordre de 120°C et, sur les cornières d'encadrement, elle était de l'ordre de 50°C. Finalement, ce volet de désenfumage a pu être homologué pareflammes et coupe-feu pour une durée de 2 heures dans les deux cas.

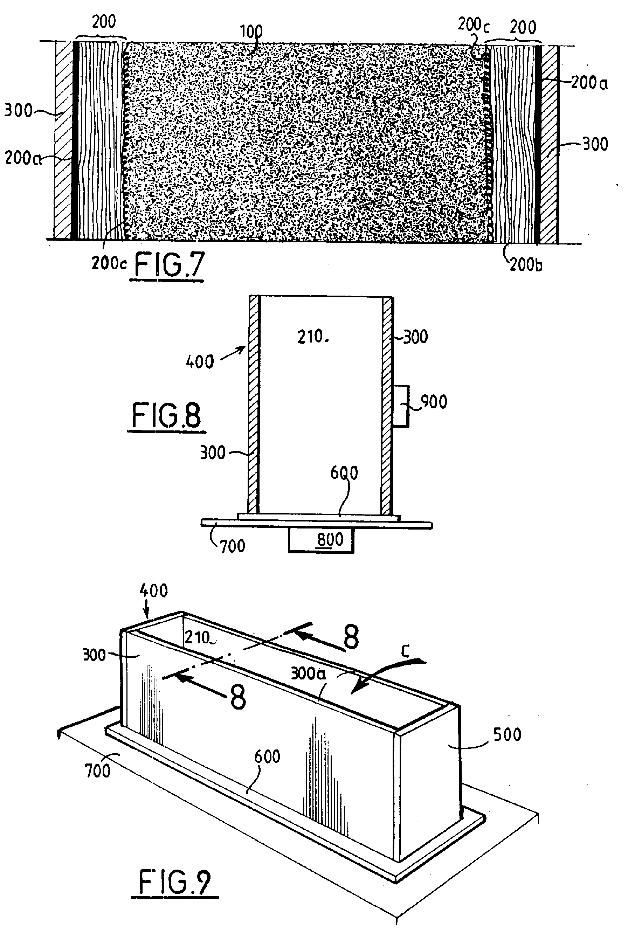

On décrira maintenant la procédé également visé par l'invention, en référence aux Figures 7 à 9.

L'élément coupe-feu représenté à la Fig.7 est réalisé en un matériau composite formé d'une résine chargé de microsphères et de fibres coupées pour constituer ainsi une mousse syntactique 100 ou un béton de résine, complété sur ses deux faces de parements 200. Chacun de ceux-ci comporte :
a) un revêtement extérieur 200a formant une première couche de résine choisie pour donner à l'élément coupe-feu final un aspect extérieur lisse et esthétique,
b) une couche 200b de tissus imprégnés de résine,
c) et une couche intérieure 200c de tissu bouclé.

Les parements 200 sont convenablement armés de mats et/ou de tissus de fibres.

On décrira en référence plus particulièrement aux Fig.8 et 9 un exemple de mise en oeuvre du procédé de fabrication de l'élément coupe- feu visé par l'invention.

## 1. Préparation des produits constitutifs :

On procède à une étuvage des microsphères afin de baisser leur degré d'humidité, par exemple pendant 4 heures à 60°C pour la qualité actuellement retenue.

On stocke la résine à température ambiante, ainsi que des renforts et un catalyseur dans l'atelier de fabrication, au minimum 24 heures avant la production des pièces, et ce afin de disposer de produits à température convenable.

On nettoie et on dégraisse des inserts et des pièces de renforcements.

## 2. Préparation des moules :

Chaque moule 400 est constitué de deux grandes faces longitudinales verticales 300, de deux faces verticales d'extrémité 500 et d'un fond 600, l'ensemble reposant sur une table vibrante 700 équipée d'un moteur d'excitation 800. L'une au moins des faces 300 peut être avantageusement munie d'un pot vibrant 900. Ces dispositifs sont connus en soi, de sorte que leur description détaillée n'est pas nécessaire.

Les moules tels que 400 sont soit en matériau plastique (polypropylène par exemple), soit en acier inoxydable, en fonction des séries de pièces à produire. Ils peuvent s'intégrer sans difficulté dans une chaîne de production en continue. Leur conception est classique et par conséquent, leur préparation pour le moulage ne demande pas de soin particulier par rapport aux méthodes habituellement pratiquées. Toutefois, chaque moule

7

doit être suffisamment résistant pour pouvoir supporter les vibrations produites par le moteur 8 et par le(s) pot(s) vibrant(s) 9, et éventuellement une centrifugation.

3. Stratification des parements ou peaux :

3.1. Fabrication de séries moyennes.

a) On effectue une stratification de tissus 200b de grammage unitaire , par exemple de 500g/m2 et d'un tissu bouclé 200c de 450g/m², afin de constituer avec les couches 200a et 200a' un parement 200. Cette stratification s'effectue sur les deux grandes faces 300 du moule 400.

b) Après ébullage de la dernière couche (tissu bouclé 200c), on relève au pinceau toutes les boucles du tissu 200c, afin qu'elles permettent ultérieurement l'ancrage des parements 200 à l'âme 100 du panneau coupe-feu.

c) Une attente à température ambiante est nécessaire pour obtenir une bonne rigidité des boucles du tissu 200c, par exemple 3 heures. Cette attente conduit à l'obtention d'un gel avancé. Il ne faut pas que les boucles se couchent lors de la coulée de l'âme intérieure 1.

3.2. Fabrication de séries importantes.

Une mécanisation du procédé de fabrication est parfaitement envisageable, compte tenu des matériaux retenus. La réalisation de chaque parement 200 s'effectue par empilage successif de tissus préimprégnés de résine qui sont déposés sur chaque grande face 300 du moule 400 à l'aide par exemple de rouleaux mécanisés, de façon connue.

Les parties sont ensuite pressées dans une enceinte thermostatée (étuve, autoclave) ou disposées entre des plateaux chauffants de presse.

3.3. Les grammages des tissus précisés ci-dessus ne sont fournis qu'à titre indicatif non limitatif. En effet, le nombre de tissus, leur poids (200g/m2 à 1000g/m2 environ) et leur qualité (croisés, équilibrés, sergés, unidirectionnels, mats, etc...) sont adaptés à la tenue mécanique et à la résistance au feu recherchées.

Les procédés décrits ci-dessus permettent de respecter le souci d'esthétique demandé pour certaines applications, sans augmenter les prix de revient.

4. Mise en place de divers inserts, de raidisseurs internes et de paumelles :

Ce sont les faces 300 du moule qui servent de faces de référence. Les inserts et raidisseurs (non représentés), sont positionnés grâce à des perçages ménagés dans le moule 400. Leur fixation s'effectue avant dépôt du revêtement extérieur 200a afin de garantir leur bon positionnement en conformité avec les prévisions. Selon les besoins, certains inserts et raidisseurs doivent affleurer la face extérieure de la pièce. Pour les paumelles, on utilise un gabarit de positionnement et de maintien. Ce gabarit est soit récupérable après chaque démoulage de pièce, soit perdu car noyé dans l'âme intérieure 100.

5. Fermeture du moule 400.

Elle s'effectue à l'aide de moyens mécaniques robustes, connus en soi et non représentés.

6. Le moule 400 est ensuite posé à chant sur la table vibrante 700. Ses grandes faces 300 sont disposées verticalement. En fonction des formes extérieures du panneau ou élément coupe-feu et de la position des inserts ou renforts, il peut être utile de fixer sur les grandes faces 300 du moule 400 et en des endroits bien précis (déterminés après mise au point de la fabrication) des pots vibrants tels que 900. Ces pots vibrants permettent un bon remplissage et un dégazage satisfaisant des matériaux qui seront versés dans le moule 400, et par conséquent une bonne homogénéité des produits.

Seul le chant horizontal supérieur 300a reste ouvert, afin de rendre possible le remplissage du moule par son ouverture supérieure 210.

Les moyens de vibration tels que 900, connus en soi, offrent de grandes possibilités de réglage pour les fréquences et les amplitudes, de façon distincte ou simultanée, afin de permettre l'obtention de toute forme de spectre de vibration.

7. Préparation du mélange de remplissage (mousse syntactique).

7.1. Cas d'une production de moyennes séries.

Le mélange est préparé sous agitation continuelle. Cette agitation est assurée par un mélangeur, du type connu par exemple sous la marque commerciale "Rayneri", dont les caractéristiques sont adaptées aux matériaux. Les dosages des constituants se réalisent par pesée.

Afin d'obtenir une bonne homogénéité du mélange, on prépare celui-ci dans l'ordre suivant :

a) 100% de la quantité totale de résine nécessaire et 50% environ de la quantité totale nécessaire de microsphères;

b) 50% environ de la quantité totale nécessaire d'un catalyseur (par exemple H2SO4) et 30% environ de la quantité totale nécessaire de microsphères;

c) 50% environ de la quantité totale nécessaire de catalyseur et 20% environ de la quantité totale nécessaire de microsphères;

ces pourcentages sont donnés de façon approximative et peuvent varier assez largement, par exemple de ±10% en fonction des composants retenus.

L'incorporation des fibres coupées doit s'effectuer très progressivement, tout en assurant un brassage lent du mélange précédent, afin d'éviter des inclusions d'air.

On coule le mélange obtenu dans le moule 400 (flèche C).

7.2. Cas d'une production de grandes séries.

Le produit mis au point est parfaitement compatible avec la technique de l'extrusion (malaxage par vis). A l'entrée d'une extrudeuse, il est prévu un ensemble de dispositifs d'alimentation automatique (un par constituant), par exemple à vis ou à air comprimé qui déversent les constituants dans la trémie de l'extrudeuse et assurent les dosages voulus.

Grâce à cette machine, on est assuré d'obtenir un mélange homogène qui est directement déposé dans le moule 400.

## 8. Mise en vibration de la table 700 et des pots vibrants 900.

Le réglage de ces dispositifs dépend du mélange et des formes de pièces à obtenir. Il doit permettre l'évacuation des bulles d'air et doit éviter la décantation et la ségrégation des éléments constituant le mélange.

## 9. Coulée du mélange ou dépôt à l'aide d'une extrudeuse :

En général, on procède par passes successives de 40 à 50 cm de hauteur. Après chacune d'elles, il faut attendre par exemple 20 à 30 minutes, le temps d'évacuer les bulles d'air.

La hauteur de coulée est toujours plus importante que ce qui est nécessaire, afin de pouvoir effectuer par la suite, un arasage à la bonne cote, et dans un matériau exempt de bulles. Dans le but d'accélérer le cycle de fabrication, il peut être utile d'avoir une installation qui réalise une dépression à l'intérieur du moule (un vide par exemple de quelques centaines de grammes). Une variante de la mise en place du mélange est son injection avec ou sans l'aide du vide, comme indiqué ci-avant.

## 10. Etuvage de la pièce maintenue dans son moule 4.

En fin de coulée, un étuvage est nécessaire pour évacuer l'eau contenue dans la mousse 100. Cet étuvage peut se faire par exemple à 65°C pendant au minimum 4 heures, la montée en température de l'étuve devant être progressive (au minimum de 0,2°C par minute). Durant cette phase, il peut être intéressant de faire le vide dans le moule 4, pour permettre une meilleure évacuation des vapeurs de rejet et un meilleur contact intime fibres-résine.

11. On procède ensuite de manière classique au démoulage de la pièce coupe-feu obtenue, puis à son ébavurage, puis on bouche les microbulles de surface à l'aide d'un mastic réalisé à partir des constituants du mélange.

On met en place un voile de surface sur la partie arasée, on procède à un étuvage final dont les caractéristiques sont adaptées au type de résine retenu et conformément aux instructions du fournisseur, par exemple à 60°C pendant 8 heures. Enfin on monte les serrureries prévues.

Diverses variantes du procédé décrit ci-dessus peuvent être mises en oeuvre.

a) Production de panneaux en très grande série.

Le produit mis au point peut parfaitement s'adapter à ce type de fabrication, qui nécessite une ligne de production en continu : réalisation des parements 200 soit par imprégnation de renforts, soit par utilisation de préimprégnés, qui se déroulent sur deux tapis continus (un par parement); étuvage de ces éléments par déplacement dans un four-tunnel; sur le parement inférieur, dépôt d'une âme extrudée (mousse en continu), à l'aide d'une extrudeuse comportant une filière plate aux dimensions du panneau à obtenir (épaisseur x largeur); dépôt toujours en continu sur cette âme, du parement avec passage sous presse (avec ou sans mise en dépression), pour chasser l'air et ainsi empêcher les cloques susceptibles de se former par gonflage d'air; étuvage final dans un four-tunnel; découpe aux dimensions.

b) Fabrication de produits de révolution (gaines ou tuyauteries par exemple, notamment pour immeubles de grandes hauteurs).

Le mélange est compatible avec les procédés de centrifugation et/ou d'enroulement filamentaire. Dans le premier cas, le moule est à l'extérieur et l'on dépose à l'intérieur les parements 200 et le mélange 100. Dans le second cas, le moule est à l'intérieur et reçoit la même structure (parements 200 plus mélange 100).

**Revendications**

1. Procédé de fabrication d'un élément coupe-feu tel qu'un panneau en matériau composite formé d'une résine chargée de microsphères et de fibres coupées pour constituer ainsi une mousse syntactique (100) ou un béton de résine, complété sur ses deux faces de parements (200) armés de tissus et/ou de mats de fibres, caractérisé en ce que :

   a) au moins un insert de renfort (3) étant noyé au moins partiellement dans le matériau composite,

   b) on réalise chaque parement (200) par dépôt, sur deux panneaux (300) constituant deux grandes faces d'un moule (400) de mats et/ou de tissus (200b) qui sont imprégnés de résine puis d'une couche terminale (200c) de tissu bouclé, dont on relève les boucles,

   c) on ferme le moule (400) en disposant sur un fond (600) en vis-à-vis en position verticale les deux panneaux (300) revêtus intérieurement de leurs parements (200) et en obturant les extrémités du moule ainsi réalisé, tout en laissant ouverte sa face supérieure (210),

   d) on dépose le moule (400) sur une table vibrante (700), et on y coule un mélange préalablement préparé sous agitation continuelle et convenablement dosé, par passes successives jusqu'à remplissage du moule,

   e) on procède à un étuvage du mélange coulé dans le moule (400) pendant une durée et à une température appropriées, et on démoule le panneau coupe-feu obtenu.

2. Procédé selon la revendication 1, caractérisé en ce que la préparation du mélange, avant coulée dans le moule, s'effectue dans l'ordre suivant:

   a) 100% de la quantité totale de résine nécessaire et 50% environ de la quantité totale nécessaire de microsphères,

   b) 50% environ de la quantité totale néessaire d'un catalyseur et 30% environ de la quantité totale nécessaire de microsphères,

   c) 50% environ de la quantité totale nécessaire de catalyseur et 20% environ de la quantité totale nécessaire de microsphères,

   ces pourcentages pouvant varier approximativement de ± 10%.

3. Procédé selon la revendication 2, caractérisé en ce qu'on incorpore progressivement au mélange des fibres coupées tout en assurant un brassage lent du mélange.

4. Procédé selon l'une des revendications 1 à 3, caractérisé en ce que, avant préparation du mélange, on étuve les microsphères pour abaisser leur degré d'humidité, on stocke la résine et le catalyseur à température ambiante, et on nettoie des inserts et pièces de renforcement destinés à être introduits et fixés dans le panneau coupe-feu par des perçages prévus dans le moule.

5. Procédé selon l'une des revendications 2 à 4, caractérisé en ce que les constituants du mélange sont dosés et introduits au moyen d'une extrudeuse alimentée par un dispositif automatique, par exemple à vis ou à air comprimé, et on procède à la coulée par passes successives entre lesquelles on évacue les bulles d'air.

6. Procédé selon la revendication 5, caractérisé en ce qu'on réalise une dépression à l'intérieur du moule (400).

7. Procédé selon l'une des revendications 1 à 6, caractérisé en ce que durant la phase d'étuvage, on fait le vide dans le moule (400) pour permettre une meilleure évacuation des vapeurs de rejet.

8. Panneau (1) en matériau composite possédant des propriétés de résistance au feu, de résistance aux impacts, d'étanchéité aux fluides et d'amortissement acoustique, fabriqué conformément au procédé selon l'une quelconque des revendications 1 à 7, caractérisé en ce que le matériau composite est constitué par une matrice de type phénoplaste qui est, dans sa partie centrale (âme), chargée de particules à base minérale et renforcée par des fibres et qui est, superficiellement sur ses deux faces principales (semelles), renforcée de nappes de renforts minéraux tissés ou non tissés, ces particules, fibres et nappes étant compatibles vis-à-vis de la matrice ; et en ce qu'au moins un insert de renfort (3) est noyé au moins partiellement dans le matériau composite.

9. Panneau selon la revendication 8, caractérisé en ce que l'insert de renfort (3) est métallique, notamment en acier inoxydable.

10. Panneau selon la revendication 8, caractérisé en ce que l'insert de renfort (3) est en matériau composite du même type phénoplaste que la susdite matrice et incorporant des tissus de verre stratifiés à haute teneur pondérale de manière à constituer un profilé de grandes caratéristiques mécaniques dans les directions appropriées.

11. Panneau selon l'une quelconque des revendications 8 à 10 caractérisé en ce que l'insert de renfort (3) est constitué sous forme sensiblement plane (bande, plaque, ...) et/ou sous forme de profilé et est disposé sensiblement dans le plan médian du panneau (1).

12. Panneau selon la revendication 11, caractérisé en ce que l'insert de renfort (3), notamment métallique, est constitué par un treillage et/ou un grillage et/ou une tôle perforée.

13. Panneau selon l'une quelconque des revendications 8 à 12, caractérisé en ce qu'il est équipé d'au moins un organe rapporté (4, 5) (accessoires et/ou éléments de support) solidarisé au susdit insert (3).

14. Panneau selon la revendication 13, caractérisé en ce que l'organe solidarisé à l'insert (3b) est une tige de support (5) dépassant la surface du panneau et destinée à supporter au moins un accessoire.

15. Panneau mobile en rotation, notamment porte, panneau de porte ou analogue, équipé de gonds de charnière, selon la revendication 13, caractérisé en ce que ces gonds (4) sont solidarisés, notamment soudés, à des plaques métalliques (3a) insérées dans le matériau composite dans le plan médian du panneau, à proximité d'un chant de celui-ci.

16. Panneau selon l'une quelconque des revendications 13 à 15, caractérisé en ce que l'organe rapporté (4, 5) est solidarisé à l'insert (3) avant constitution du matériau composite.

17. Panneau selon l'une quelconque des revendications 8 à 16, caractérisé en ce que le produit composite, dans la zone de l'âme, possède la formulation pondérale qui suit:
résine phénolique catalysée :　　de 70 à 80 %
particules à base minérale :　　de 8 à 12 %
fibres :　　de 3 à 6 %

18. Panneau selon la revendication 17, caractérisé en ce que les particules à base minérale sont des microsphères creuses à base de silice.

19. Panneau selon la revendication 17 ou 18, caractérisé en ce que les fibres, notamment en verre, ont une longueur comprise entre 10 mm et 18 mm.

20. Panneau selon l'une quelconque des revendications 8 à 19, caractérisé en ce que le produit composite, dans la zone des semelles, possède la formulation qui suit :
résine phénolique catalysée:　　de 35 à 50 % en poids
et au moins une nappe de tissu bouclé ayant une masse surfacique d'environ 500 g/m$^2$, les boucles étant noyées dans la zone de l'âme.

21. Panneau selon la revendication 20, caractérisé en ce que le matériau composite possède en outre une nappe superficielle en tissu léger.

22. Panneau selon les revendications 19 et 20, caractérisé en ce que le matériau composite possède la formulation qui suit :
dans la zone d'âme
résine phénolique catalysée :　　76,3% en poids
microsphères à base de silice:　　10,25 % en poids

fibres de verre de 13 mm :  4,3 % en poids
dans les zones de semelle :
résine phénolique catalysée :  50 % en poids
renforts tissés de verre :  50 % en poids
  trois nappes de tissu bouclé ayant une masse surfacique de 500 g/m², 
  une nappe intérieure de tissu bouclé ayant une masse surfacique de 400 g/m², les boucles étant noyées dans l'âme (interfaces semelles/âme),
  et une nappe de surface d'un tissu léger ayant une masse surfacique de 30 g/m².

23. Panneau selon l'une quelconque des revendications 20 à 22, caractérisé en ce que le tissu est un taffetas.


## Claims

1. Production process for a fire-resistant element such as a panel of composite material composed of a resin loaded with microbeads and staple fibres to thus constitute a syntactic foam (100) or a resin concrete, completed on its two sides with facings (200) reinforced with fibrous fabrics and/or mats, characterized in that:
   a) at least one reinforcing piece (3) being at least partially embedded in the composite material,
   b) each facing (200) is produced by depositing, on two panels (300) constituting two large surfaces of a mould (400), mats and/or fabrics (200b) which are impregnated with resin then a final layer (200c) of looped fabric, the loops of which are raised,
   c) the mould (400) is closed by placing the two panels (300) covered internally with their facings (200) on a base (600) in the vertical position and opposite one another and by closing up the ends of the mould thus produced, while leaving its upper face (210) open,
   d) the mould (400) is placed on a vibrating table (700), and a mixture previously prepared under continuous agitation and suitably measured out is cast in it by successive passes until the mould is full,
   e) the mixture cast in the mould (400) is oven dried for an appropriate length of time and at a suitable temperature, and the fire-resistant panel obtained is removed from the mould.

2. Process according to claim 1, characterized in that the preparation of the mixture, before casting in the mould, is carried out in the following order:
   a) 100% of the total quantity of resin needed and about 50% of the total quantity of microbeads needed,
   b) about 50% of the total quantity of catalyst needed and about 30% of the total quantity of microbeads needed,
   c) about 50% of the total quantity of catalyst needed and about 20% of the total quantity of microbeads needed, these percentages being able to vary by about ± 10%.

3. Process according to claim 2, characterized in that staple fibres are progressively incorporated into the mixture while the mixture is slowly stirred.

4. Process according to one of claims 1 to 3, characterized in that, before preparation of the mixture, the microbeads are oven-dried to reduce their degree of moisture, the resin and the catalyst are stored at ambient temperature, and the inserts and reinforcing pieces intended to be introduced and fixed in the fire-resistant panel via holes provided in the mould are cleaned.

5. Process according to one of claims 2 to 4, characterized in that the constituents of the mixture are measured out and introduced by means of an extruder supplied by an automatic device, for example powered by a screw device or compressed air, and casting is carried out by successive passes between which the air bubbles are removed.

6. Process according to claim 5, characterized in that a low pressure is created inside the mould (400).

7. Process according to one of claims 1 to 6, characterized in that during the oven-drying stage, a vacuum is created in the mould (400) to allow improved removal of the waste fumes.

8. Panel (1) of composite material possessing the properties of fire-resistance, shock-resistance, imperviousness to fluids and acoustic damping, produced in accordance with the process according to any one of claims 1 to 7, characterized in that the composite material is constituted by a matrix of phenolic plastic

EP 0 412 903 B1

type which is, in its central part (core), loaded with mineral-based particles and reinforced by fibres and which is, superficially on its two main surfaces (bases), reinforced with sheets of woven or non-woven mineral reinforcing pieces, these particles, fibres and sheets being compatible with the matrix; and in that at least one reinforcing piece (3) is embedded at least partially in the composite material.

9. Panel according to claim 8, characterized in that the reinforcing piece (3) is made of metal, notably stainless steel.

10. Panel according to claim 8, characterized in that the reinforcing piece (3) is a composite material of the same phenolic plastic type as the above-mentioned matrix and incorporating stratified glass fabrics with a high weight content so as to constitute a profile with high mechanical properties in the appropriate directions.

11. Panel according to any one of claims 8 to 10 characterized in that the reinforcing piece (3) is of an approximately flat form (strip, plate, ...) and/or of a shaped form and is arranged approximately in the midplane of the panel (1).

12. Panel according to claim 11, characterized in that the reinforcing piece (3), in particular of metal, is constituted by a mesh and/or a grid and/or a perforated metal sheet.

13. Panel according to any one of claims 8 to 12, characterized in that it is fitted with at least one mounted element (4,5) (accessories and/or support elements) integral with the above-mentioned reinforcing piece (3).

14. Panel according to claim 13, characterized in that the element integral with the reinforcing piece (3b) is a support bar (5) passing through the surface of the panel and intended to support at least one accessory.

15. Rotationally-movable panel, in particular a door, door panel or similar, fitted with hinge pins, according to claim 13, characterized in that these pins (4) are solidly attached, notably soldered, to metal plates (3a) inserted in the composite material in the mid-plane of the panel, near to an edge of the latter.

16. Panel according to any one of claims 13 to 15, characterized in that the mounted element (4,5) is integral with the reinforcing piece (3) before formation of the composite material.

17. Panel according to any one of claims 8 to 16, characterized in that the composite product, in the area of the core, has the following formulation by weight:
catalyzed phenolic resin:     from 70 to 80%
mineral-based particles:     from 8 to 12%
fibres:     from 3 to 6%

18. Panel according to claim 17, characterized in that the mineral-based particles are hollow silica-based microbeads.

19. Panel according to claim 17 or 18, characterized in that the fibres, in particular of glass, have a length comprised between 10 mm and 18 mm.

20. Panel according to any one of claims 8 to 19, characterized in that the composite product, in the area of bases, has the following formulation:
catalyzed phenolic resin from 35 to 50% by weight and at least one sheet of looped fabric having a mass per unit area of about 500 g/m$^2$, the loops being embedded in the core area.

21. Panel according to claim 20, characterized in that the composite material has in addition a surface sheet of lightweight fabric.

22. Panel according to claims 19 and 20, characterized in that the composite material has the following formulation: in the core area
catalyzed phenolic resin:     76.3% by weight
silica-based microbeads:     10.25% by weight
13 mm glass fibres:     4.3% by weight
in the base areas

catalyzed phenolic resin:      50% by weight
glass fibre reinforcing pieces:    50% by weight
three sheets of looped fabric having a mass per unit area of 500 g/m², an inner sheet of looped fabric having a mass per unit area of 400 g/m², the loops being embedded in the core (base/core interfaces), and a surface sheet of a light fabric having a mass per unit area of 30 g/m².

23. Panel according to any one of claims 20 to 22, characterized in that the fabric is a taffeta.


**Patentansprüche**

1. Verfahren zum Herstellen eines feuerhemmenden Elementes, so wie einer Tafel aus Verbundwerkstoff, gebildet aus einem Harz, das mit Mikrokugeln und mit geschnittenen Fasern beladen ist, um so einen syntaktischen Schaum (100) oder einen Harzbeton zu bilden, auf ihren beiden Flächen ergänzt mit Verkleidungen (200), die mit Geweben und/oder Fasermatten bewehrt sind, dadurch gekennzeichnet, daß:
   a) wenigstens ein Verstärkungseinsatzteil (3) wenigstens teilweise in den Verbundwerkstoff eingelassen ist;
   b) man jede Verkleidung (200) durch Auflegen auf zwei Tafeln (300), die zwei große Flächen einer Form (400) bilden, von Matten und/oder Geweben (200b), die mit Harz imprägniert sind, dann einer Endschicht (200c) aus Schlingengewebe, deren Schlingen man hochrichtet, herstellt,
   c) man die Form (400) schließt, indem man auf einem Boden (600) die beiden Tafeln (300), die innen mit ihren Verkleidungen (200) bedeckt sind, einander gegenüberliegend in vertikaler Position anordnet und indem man die Enden der so hergestellten Form verschließt, wobei ihre obere Fläche (210) offengelassen wird,
   d) man die Form (400) auf einem Schwingtisch (700) abstellt und man in sie eine zuvor bereitete Mischung, bei kontinuierlichem Schütteln und passend dosiert, in aufeinanderfolgenden Arbeitsgängen bis zum Füllen der Form gießt,
   e) man ein Trocknen durch Erwärmen der in die Form (400) gegossenen Mischung während einer zweckmäßigen Dauer und bei einer zweckmäßigen Temperatur vornimmt und man die erhaltene feuerhemmende Tafel entformt.

2. Verfahren nach Anspruch 1, dadurch gekennzeichnet, daß die Herstellung der Mischung, vor dem Gießen in die Form, in folgender Reihenfolge vorgenommen wird:
   a) 100% der Gesamtmenge des nötigen Harzes und ungefähr 50% der nötigen Gesamtmenge der Mikrokugeln,
   b) ungefähr 50% der nötigen Gesamtmenge eines Katalysators und ungefähr 30% der nötigen Gesamtmenge der Mikrokugeln,
   c) ungefähr 50% der nötigen Gesamtmenge des Katalysators und ungefähr 20% der nötigen Gesamtmenge der Mikrokugeln,
   wobei diese Prozentangaben annähernd um ± 10% variieren können.

3. Verfahren nach Anspruch 2, daß man zunehmend geschnittene Fasern zu der Mischung zusetzt, wobei immer ein langsames Umrühren der Mischung sichergestellt wird.

4. Verfahren nach einem der Ansprüche 1 bis 3, dadurch gekennzeichnet, daß, vor dem Zubereiten der Mischung, man die Mikrokugeln durch Erwärmen trocknet, um ihren Feuchtigkeitsgrad abzusenken, man das Harz und den Katalysator bei Umgebungstemperatur aufbewahrt und man die Einsatzteile und Verstärkungsstücke, die dazu bestimmt sind, durch in der Form vorgesehene Bohrungen in die feuerhemmende Tafel eingefügt und in ihr befestigt zu werden, reinigt.

5. Verfahren nach einem der Ansprüche 2 bis 4, dadurch gekennzeichnet, daß die Bestandteile der Mischung mittels eines Extruders, der durch eine automatische Vorrichtung, beispielsweise mit Spindel oder Druckluft, versorgt wird, dosiert und eingeführt werden, und daß man das Gießen in aufeinanderfolgenden Arbeitsgängen vornimmt, zwischen denen man die Lufteinschlüsse evakuiert.

6. Vorrichtung nach Anspruch 5, dadurch gekennzeichnet, daß man einen Unterdruck im Inneren der Form (400) herstellt.

7. Verfahren nach einem der Ansprüche 1 bis 6, dadurch gekennzeichnet, daß man während der Phase des Trocknens durch Erwärmen das Vakuum in der Form (400) herstellt, um eine bessere Evakuierung der ausgestoßenen Dämpfe zu erlauben.

8. Tafel (1) aus Verbundwerkstoff, welche die Eigenschaften der Feuerbeständigkeit, des Stoßwiderstandes, der Fluiddichtigkeit, und der Schalldämpfung hat, hergestellt entsprechend dem Verfahren nach einem der Ansprüche 1 bis 7, dadurch gekennzeichnet, daß der Verbundwerkstoff durch eine Matrix vom Phenoplasten-Typ gebildet ist, welcher in seinem Zentralbereich (Kern), mit Teilchen mineralischer Basis beladen und durch Fasern verstärkt ist und welcher auf der Oberfläche seiner beiden Hauptflächen (Auflageflächen) mit mineralischen Verstärkungsvliesen, gewebt oder nicht gewebt, verstärkt ist, wobei diese Teilchen, Fasern und Vliese mit der Matrix kompatibel sind, und daß wenigsten ein Verstärkungseinsatz (3) wenigstens teilweise in den Verbundwerkstoff eingelassen ist.

9. Tafel nach Anspruch 8, dadurch gekennzeichnet, daß der Verstärkungseinsatz (3) metallisch ist, insbesondere aus rostfreiem Stahl.

10. Tafel nach Anspruch 8, dadurch gekennzeichnet, daß der Verstärkungseinsatz (3) aus Verbundwerkstoff von demselben Phenoplast-Typ ist wie die obengenannte Matrix und laminierte Glasgewebe mit hohem Gewichtsgehalt aufweist, so daß ein Profil mit guten mechanischen Eigenschaften in geeigneten Richtungen gebildet wird.

11. Tafel nach einem der Ansprüche 8 bis 10, dadurch gekennzeichnet, daß der Verstärkungseinsatz (3) in im wesentlichen ebener Form (Band, Platte, ...) und/oder in profilierter Form gebildet ist und im wesentlichen in der Mittelebene der Tafel (1) angeordnet ist.

12. Tafel nach Anspruch 11, dadurch gekennzeichnet, daß der Verstärkungseinsatz (3), der im wesentlichen metallisch ist, durch ein Drahtgewebe und/oder ein Gitter und/oder ein perforiertes Blech gebildet ist.

13. Tafel nach einem der Ansprüche 8 bis 12, dadurch gekennzeichnet, daß sie mit wenigstens einem Anbauelement (4, 5) (Zusatzteilen und/oder Stützelementen) ausgestattet ist, das gemeinsam mit dem Einsatzteil (3) ausgebildet ist.

14. Tafel nach Anspruch 13, dadurch gekennzeichnet, daß das gemeinsam mit dem Einsatzteil (3b) ausgebildete Element ein Tragarm (5) ist, der über die Fläche der Tafel hinausragt und dazu bestimmt ist, wenigstens ein Zusatzteil zu tragen.

15. Drehbewegliche Tafel, insbesondere eine Tür, ein Türfach oder dergleichen, mit Scharnierstiften ausgestattet, nach Anspruch 13, dadurch gekennzeichnet, daß diese Stifte (4) gemeinsam mit metallischen Platten (3a) ausgebildet sind, insbesondere verschweißt sind, die in den Verbundwerkstoff in der Mittelebene der Tafel nahe einer Kante derselben eingelegt sind.

16. Tafel nach einem der Ansprüche 13 bis 15, dadurch gekennzeichnet, daß das Anbauelement (4, 5) gemeinsam mit dem Einsatzteil (3) vor dem Bilden des Verbundwerkstoffes ausgebildet ist.

17. Tafel nach einem der Ansprüche 8 bis 16, dadurch gekennzeichnet, daß das Verbundprodukt im Bereich des Kerns die folgende Gewichtsformulierung besitzt:

```
katalysiertes Phenolharz:              70 bis 80%
Teilchen auf mineralischer Basis:       8 bis 12%
Fasern:                                 3 bis  6%.
```

18. Tafel nach Anspruch 17, dadurch gekennzeichnet, daß die Teilchen auf mineralischer Basis hohle Mikrokugeln auf Kieselerdebasis sind.

19. Tafel nach Anspruch 17 oder 18, dadurch gekennzeichnet, daß die Fasern, insbesondere aus Glas, eine Länge zwischen 10 mm und 18 mm haben.

20. Tafel nach einem der Ansprüche 8 bis 19, dadurch gekennzeichnet, daß das Verbundprodukt in dem Bereich der Auflageflächen die folgende Formulierung besitzt: katalysiertes Phenolharz: 35 bis 50 Gewichts-% und wenigstens ein Schlingengewebevlies mit einer Flächendichte von ungefähr 500 g/m2, wobei die Schlingen in dem Bereich des Kernes hochgerichtet sind.

21. Tafel nach Anspruch 20, dadurch gekennzeichnet, daß der Verbundwerkstoff weiterhin ein Oberflächenvlies aus leichtem Gewebe besitzt.

22. Tafel nach den Ansprüchen 19 und 20, dadurch gekennzeichnet, daß der Verbundwerkstoff die folgende Formulierung besitzt:
in dem Bereich des Kerns

```
katalysiertes Phenolharz:        76,3 Gewichts-%
Mikrokugeln auf Kieselerde-
basis:                           10,25 Gewichts-%
Glasfasern von 13 mm Länge:       4,4 Gewichts-%
```

in den Bereichen der Auflageflächen
katalysiertes Phenolharz:        50 Gewichts-%
Glasgewebeverstärkungen:         50 Gewichts-%
drei Schlingengewebevliese mit einem Flächengewicht von 500 g/m2,
ein innenliegendes Schlingengewebevlies mit einem Flächengewicht von 400 g/m2, wobei die Schlingen in den Kern eingelassen sind (Schnittstelle Auflageflächen/Kern),
und ein Oberflächenvlies eines leichten Gewebes mit einem Flächengewicht von 30 g/m2.

23. Tafel nach einem der Ansprüche 20 bis 22, dadurch gekennzeichnet, daß das Gewebe ein Taft ist.

FIG.1.

FIG.2.

FIG.3.

FIG. 4B.

FIG. 4A

EP 0 412 903 B1

# FIG.6.

# FIG.5.

19

200        100                    200c    200

300

200a                                                200a

                                                    300

200c FIG.7                                    200b

400                    210.        300

FIG.8                                    900

300              600

700              800

400

300        210          8

300a          c

8

700        600                    500

FIG.9